# EUROPÄISCHE PATENTANMELDUNG

(11) **EP 3 578 494 A1**
(43) Veröffentlichungstag der Anmeldung: **11.12.2019**
(21) Anmeldenummer: 18176185.9
(22) Anmeldetag: 06.06.2018
(51) Int. Cl.: B66B 5/12, B66B 5/00, B66B 7/10, G01L 5/04

(54) **AUFZUGSANLAGE UND VERFAHREN ZUM ÜBERWACHEN DES RIEMENZUSTANDS**

(71) Anmelder: Inventio AG, 6052 Hergiswil (CH)
(72) Erfinder: PRAKASH, Om, 410501 Pune, Maharashtra (IN); KALE, Sunil, 410501 Pune, Maharashtra (IN)

(57) **Zusammenfassung**

Die Erfindung betrifft eine Aufzugsanlage (10), die eine Kabine (12), ein Gegengewicht (14), einen Motor (26) sowie einen ersten und einen zweiten Riemen (16) zum Tragen der Kabine (12) und des Gegengewichtes (14) umfasst. Ferner sind zwei Kraftmesseinheiten (30) vorgesehen, welche die in den Riemen (16) wirkenden Kräfte ermitteln. Ferner umfasst die Aufzugsanlage (10) eine Steuereinheit (32), welche in Abhängigkeit eines Vergleiches zwischen den in den Riemen (16) wirkenden Kräften beim Erfüllen mindestens eines vorbestimmten Kriteriums eine Reaktion auslöst. Ferner betrifft die Erfindung ein Verfahren zum Betreiben einer solchen Aufzugsanlage (10).

## Beschreibung

Die Erfindung betrifft eine Aufzugsanlage, die eine Kabine, ein Gegengewicht und einen Motor zum Bewegen der Kabine und des Gegengewichtes umfasst. Ferner hat die Aufzugsanlage einen ersten Riemen und mindestens einen zweiten Riemen zum Tragen der Kabine und des Gegengewichtes.

In modernen Aufzugsanlagen werden vermehrt anstelle von Seilen Riemen verwendet, die einen Kunststoffmantel, insbesondere aus Polyurethan, und darin eingebettete Stahlseile umfassen. Bei einer verbreiteten Ausführungsform weisen die Riemen Rippen auf, welche in komplementär ausgebildete Rillen der Rollen, über die die Riemen geführt sind, eingreifen.

Beim Betrieb der Aufzugsanlage kann es dazu kommen, dass die Riemen in den Rillen der Rollen aufsteigen und im Extremfall aus den Rillen hinausspringen, was auch als Belt Jump bezeichnet wird. Gründe hierfür können falsche Ausrichtungen der Rollen, schlagartiges Bremsen der Aufzugsanlage aufgrund eines Stromausfalls oder eines Notstopps sowie hohe Traktion, beispielsweise aufgrund hoher Luftfeuchtigkeit, sein.

Die bekannten Überwachungsvorrichtungen, welche insbesondere auch eingesetzt werden, um schlaffe Riemen bzw. Seile zu ermitteln, können das Auftreten eines Belt Jumps und insbesondere die Detektion eines kurz bevorstehenden Belt Jumps häufig nicht oder nicht ausreichend detektieren.

Es ist Aufgabe der Erfindung, eine Aufzugsanlage und ein Verfahren zum Betreiben einer Aufzugsanlage anzugeben, die einen sicheren Betrieb der Aufzugsanlage gewährleisten.

Diese Aufgabe wird durch eine Aufzugsanlage mit den Merkmalen des Anspruchs 1 sowie ein Verfahren mit den Merkmalen des unabhängigen Verfahrensanspruchs gelöst. Vorteilhafte Weiterbildungen der Erfindung sind in den abhängigen Ansprüchen angegeben.

Erfindungsgemäß ist eine erste Kraftmesseinheit zur Ermittlung einer im ersten Riemen wirkenden ersten Kraft sowie eine zweite Kraftmesseinheit zur Ermittlung einer im zweiten Riemen wirkenden zweiten Kraft vorgesehen. Ferner umfasst die Aufzugsanlage eine Steuereinheit, welche die erste und die zweite Kraft miteinander vergleicht und in Abhängigkeit des Ergebnisses dieses Vergleiches bei Erfüllen von vorbestimmten Kriterien eine Reaktion auslöst.

Die Kraftmesseinheiten können insbesondere als sogenannte Kraftmessdosen ausgebildet sein. Insbesondere können die Kraftmesseinheiten einen Kraftmessbolzen, vorzugsweise drei Kraftmessbolzen, umfassen, so dass eine einfache und sichere Ermittlung der Kraft möglich ist.

Alternativ können auch Kraftmesseinheiten verwendet werden, welche nicht eine Kraft, sondern die in den Riemen herrschenden mechanischen Spannungen ermitteln.

Solange wie die Aufzugsanlage ordnungsgemäß läuft und die Riemen nicht in den Rillen aufsteigen, kann davon ausgegangen werden, dass die in den beiden Riemen herrschenden Kräfte beim Betrieb der Aufzugsanlage in etwa gleich sind. Kommt es jedoch zu Abweichungen zwischen den beiden Kräften, kann daraus geschlossen werden, dass zumindest einer der Riemen im Begriff ist, innerhalb der Rillen aufzusteigen, also ein Belt Jump passieren könnte. In diesem Fall wird eine vorbestimmte Reaktion ausgelöst, welche beispielsweise darin bestehen kann, dass eine Warnung ausgegeben wird, so dass die Ausrichtung der Riemen überprüft werden kann, und/oder ein Stilllegen der Aufzugsanlage sein kann.

Auf diese Weise wird auf einfache Art das Bevorstehen eines Belt Jumps oder ein bereits eingetretener Belt Jump ermittelt. Ferner kann somit der Beschädigung der Riemen vorgebeugt werden, indem die Aufzugsanlage beispielsweise außer Betrieb genommen wird, bevor tatsächlich ein Belt Jump erfolgt.

Bei einer bevorzugten Ausführungsform der Erfindung ermittelt die Steuereinheit die Differenz zwischen der ersten und der zweiten Kraft und löst in Abhängigkeit dieser Differenz bei Erfüllen der vorbestimmten Kriterien eine Reaktion aus. Auf diese Weise kann eine einfache Auswertung der ermittelten Kräfte erfolgen.

Bei einer besonders bevorzugten Ausführungsform der Erfindung gibt die Steuereinheit, wenn die Differenz zwischen den beiden Kräften einen voreingestellten ersten Grenzwert überschreitet, eine Warnung aus. Überschreitet die Differenz dagegen einen zweiten Grenzwert, steuert die Steuereinheit den Motor derart an, dass die Aufzugsanlage angehalten wird, also die Kabine gestoppt wird.

Hierbei ist der zweite Grenzwert insbesondere größer als der erste Grenzwert. Auf diese Weise wird ein zweistufiges Warnsystem realisiert, bei dem beim Auftreten einer geringen aber oberhalb des ersten Grenzwertes liegenden Differenz eine Warnung ausgelöst wird, dass etwas mit dem Lauf der Riemen nicht stimmt und somit ein Belt Jump passieren könnte, beim Überschreiten des zweiten Grenzwertes, also bei einer größeren Abweichung zwischen den Kräften, jedoch bereits auf einen Belt Jump geschlossen werden kann und somit die Anlage notfallmäßig außer Plan genommen wird.

Auf diese Weise kann zum einen ein Vorwamsystem realisiert werden, über das Belt Jumps verhindert und somit Beschädigungen von Riemen vermieden bzw. minimiert werden und zum anderen beim Auftreten eines Belt Jumps hierauf unmittelbar reagiert werden.

Die zuvor genannte erste und zweite Kraft werden hierbei insbesondere über die Kraftmesseinheiten zeitgleich bestimmt. Vorzugsweise wird ein zeitlicher Verlauf der Kräfte über die jeweiligen Kraftmesseinheiten ermittelt, wodurch insbesondere eine fortlaufende Echtzeitüberwachung der Riemen durchgeführt wird.

Bei einer bevorzugten Ausführungsform ermittelt die Steuereinheit in Abhängigkeit der Differenz zwischen den über die beiden Kraftmesseinheiten ermittelten Kräften einen Beschädigungszustand mindestens eines der beiden Riemen, vorzugsweise beider Riemen. Auf diese Weise kann über die herrschenden Kräfte bzw. Spannungen in den Riemen auf deren Zustand geschlossen werden und somit ein Belt-Monitoring realisiert sein.

Ferner ist es vorsteilhaft, wenn die Steuereinheit einen Komparator umfasst, wobei an den beiden Eingängen des Komparators die Signale der beiden Kraftmesseinheiten liegen und als Ausgang des Komparators ein Signal ausgegeben wird, welches der Differenz entspricht und dann über die Steuereinheit entsprechend ausgewertet werden kann.

Ferner betrifft ein Verfahren zum Betreiben einer Aufzugsanlage, die eine Kabine, ein Gegengewicht, einen Motor zum Bewegen der Kabine und des Gegengewichtes, einen ersten Riemen zum Tragen der Kabine und des Gegengewichtes und mindestens einen zweiten Riemen zum Tragen der Kabine und des Gegengewichtes umfasst. Bei dem Verfahren wird mithilfe einer ersten Kraftmesseinheit eine im ersten Riemen wirkende erste Kraft und mithilfe einer zweiten Kraftmesseinheit eine im zweiten Riemen wirkende zweite Kraft ermittelt. Die erste und die zweite Kraft werden miteinander verglichen und in Abhängigkeit des Ergebnisses dieses Vergleiches wird beim Erfüllen mindestens eines vorbestimmten Kriteriums eine Reaktion ausgelöst.

Vorzugsweise wird eine Differenz zwischen der ersten und der zweiten Kraft ermittelt und in Abhängigkeit der Differenz beim Erfüllen des zumindest einen vorbestimmten Kriteriums eine Reaktion ausgelöst.

Das zuvor beschriebene Verfahren kann mit den in den auf den unabhängigen Vorrichtungsanspruch rückbezogenen abhängigen Vorrichtungsansprüchen genannten Merkmalen bzw. entsprechenden Verfahrensmerkmalen weitergebildet werden.

Weitere Merkmale und Vorteile der Erfindung ergeben sich aus der folgenden Beschreibung, die die Erfindung anhand von Ausführungsbeispielen im Zusammenhang mit den beigefügten Figuren näher erläutert.

Es zeigen:
- Fig. 1: eine schematische Darstellung einer Aufzugsanlage; und
- Fig. 2: eine schematische, perspektivische Darstellung einer Kraftmesseinheit der Aufzugsanlage nach Fig. 1.

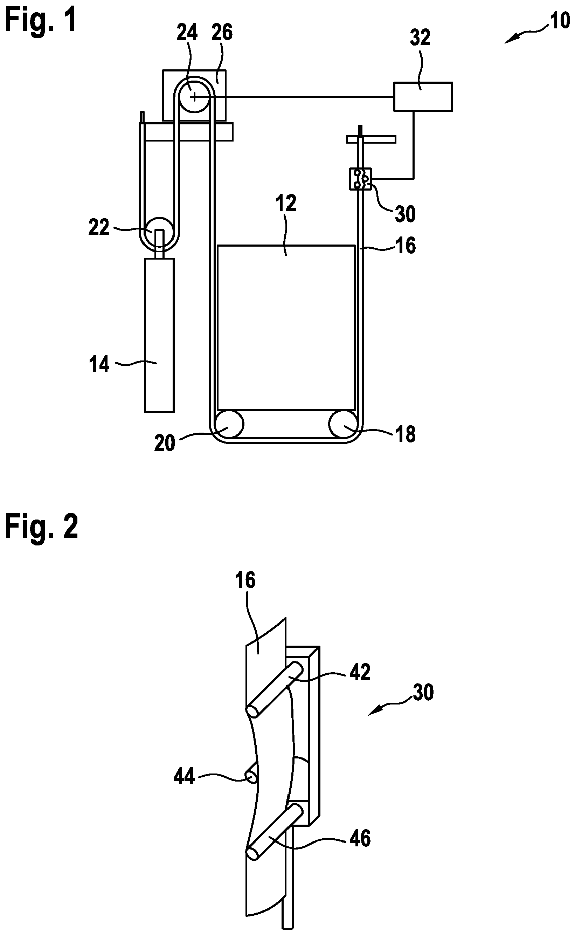

In Fig. 1 ist eine schematische, stark vereinfachte Darstellung einer Aufzugsanlage gezeigt, die eine Kabine 12 sowie ein Gegengewicht 14 umfasst, welche über zwei Riemen 16 miteinander gekoppelt und getragen sind. Hierbei ist aufgrund der einfachen Draufsicht der Darstellung nur einer der beiden Riemen 16 sichtbar, da der andere Riemen 16 hinter diesem Riemen 16 verborgen ist.

Die Riemen 16 sind über mehrere Umlenkrollen 18 bis 22 geführt, sowie über den Kontakt zu einer Treibscheibe 24 eines Motors 26 angetrieben.

Pro Riemen 16 ist jeweils eine Kraftmesseinheit 30 vorgesehen, wobei wiederum nur die zu dem ersten Riemen 16 gehörende Kraftmesseinheit 30 in Fig. 1 sichtbar ist, da die andere hinter dieser angeordnet ist. Mit Hilfe der Kraftmesseinheiten 30 wird jeweils die in dem jeweiligen Riemen 16 wirkende Kraft ermittelt und an eine Steuereinheit 32 übertragen. Die Steuereinheit 32 ermittelt die Differenz zwischen den in den Riemen 16 wirkenden Kräften und vergleicht die ermittelte Differenz mit voreingestellten Grenzwerten. Wird ein erster Grenzwert, nicht jedoch eine zweiter Grenzwert, welcher größer als der erste Grenzwert ist, überschritten, so wird eine Warnung ausgegeben, dass ein Belt Jump passieren könnte, so dass ein Servicetechniker die Aufzugsanlage 10 warten kann. Somit soll das Auftreten von Belt Jumps und Beschädigungen an den Riemen 16 vermieden werden.

Ist die ermittelte Differenz der Kräfte größer als der zweite Grenzwert, wird darauf geschlossen, dass bereits ein Belt Jump aufgetreten ist und die Steuereinheit 32 steuert den Motor 26 derart an, dass die Aufzugsanlage 10 außer Betrieb genommen wird und kein Verfahren der Kabine 12 mehr erfolgt.

Bei einer alternativen Ausführungsform der Erfindung kann auch lediglich ein Grenzwert voreingestellt sein und entsprechend beispielsweise immer die Aufzugsanlage außer Betrieb genommen werden oder immer nur eine Warnung ausgegeben werden. Alternativ ist es auch möglich, dass über einen einzigen Grenzwert beide beschriebenen Reaktionen ausgelöst werden. Es kann über die Kraftmesseinheiten 30 anstelle einer Kraft auch die jeweils wirkende mechanische Spannung in den Riemen 16 ermittelt werden.

In Fig. 2 ist eine schematische, perspektivische Darstellung einer der Kraftmesseinheiten 30 gezeigt. Die Kraftmesseinheit 30 umfasst drei Stifte 42 bis 46, wobei die beiden Stifte 42, 46 an einer ersten Seite des Riemens 16 und der zwischen den beiden Stiften 42, 46 angeordnete weitere Stift 44 auf der der ersten Seite gegenüberliegenden Seite des Riemens 16 angeordnet ist, so dass der Riemen 16 zwischen den Stiften 42 bis 46 hindurchgeführt ist und über die Stifte, welche insbesondere Kraftmessbolzen darstellen, eine entsprechende Ermittlung der in dem Riemen 16 wirkenden Kraft erfolgen kann. Insbesondere handelt es sich bei der Kraftmesseinheit 30 um eine sogenannte 3-Pin Load Cell.

### Bezugszeichenliste

- 10: Aufzugsanlage
- 12: Kabine
- 14: Gegengewicht
- 16: Riemen
- 18 bis 22: Umlenkrolle
- 24: Treibscheibe
- 26: Motor
- 30: Kraftmesseinheit
- 32: Steuereinheit
- 42, 44, 46: Stift

## Patentansprüche

1. Aufzugsanlage,
mit einer Kabine (12),
einem Gegengewicht (14),
einem Motor (24) zum Bewegen der Kabine (12) und des Gegengewichts (14), einem ersten Riemen (16) zum Tragen der Kabine (12) und des Gegengewichtes (14), und
mit mindestens einem zweiten Riemen (16) zum Tragen der Kabine (12) und des Gegengewichts (14),
**dadurch gekennzeichnet, dass** eine erste Kraftmesseinheit (30) zur Ermittlung einer im ersten Riemen (16) wirkenden ersten Kraft vorgesehen ist,
dass eine zweite Kraftmesseinheit(30) zur Ermittlung einer im zweiten Riemen (16) wirkenden zweiten Kraft vorgesehen ist, und
dass eine Steuereinheit (32) vorgesehen ist, welche die erste und die zweite Kraft miteinander vergleicht und in Abhängigkeit des Ergebnisses des Vergleichs bei Erfüllen mindestens eines vorbestimmten Kriteriums eine Reaktion auslöst.

2. Aufzugsanlage (10) nach Anspruch 1, **dadurch gekennzeichnet, dass** die Steuereinheit (32) eine Differenz zwischen der ersten und der zweiten Kraft ermittelt und in Abhängigkeit der Differenz bei Erfüllen des mindestens einen vorbestimmten Kriteriums eine Reaktion auslöst.

3. Aufzugsanlage (10) nach Anspruch 1 oder 2, **dadurch gekennzeichnet, dass** die Steuereinheit (32), wenn die Differenz einen voreingestellten ersten Grenzwert überschreitet, eine Warnmeldung ausgibt.

4. Aufzugsanlage (10) nach Anspruch 2 oder 3, **dadurch gekennzeichnet, dass** die Steuereinheit (32), wenn die Differenz einen voreingestellten zweiten Grenzwert überschreitet, den Motor (24) derart ansteuert, dass die Kabine (12) angehalten wird.

5. Aufzugsanlage (10) nach Anspruch 4, **dadurch gekennzeichnet, dass** der zweite Grenzwert grösser als der erste Grenzwert ist.

6. Aufzugsanlage (10) nach einem der vorhergehenden Ansprüche, **dadurch gekennzeichnet, dass** die erste Kraft und die zweite Kraft, aus denen die Differenz gebildet wird, durch die Kraftmesseinheiten (30) zeitgleich bestimmt werden.

7. Aufzugsanlage (10) nach einem der vorhergehenden Ansprüche, **dadurch gekennzeichnet, dass** die Kraftmesseinheiten (30) jeweils einen zeitlichen Verlauf der Kraft in dem jeweiligen Riemen (16) ermitteln.

8. Aufzugsanlage (10) nach einem der vorhergehenden Ansprüche, **dadurch gekennzeichnet, dass** die Ermittlung der ersten Kraft, der zweiten Kraft, der Differenz und ggf. das Auslösen der Reaktion in Echtzeit erfolgt.

9. Aufzugsanlage (10) nach einem der vorhergehenden Ansprüche, **dadurch gekennzeichnet, dass** die erste Kraftmesseinheit und/oder die zweite Kraftmesseinheit (30) jeweils mindestens einen Kraftmessbolzen (42, 44, 46) umfassen.

10. Aufzugsanlage (10) nach einem der vorhergehenden Ansprüche, **dadurch gekennzeichnet, dass** die erste Kraftmesseinheit und/oder die zweite Kraftmesseinheit (30) jeweils mindestens drei Kraftmessbolzen (42, 44, 46) umfassen.

11. Aufzugsanlage (10) nach Anspruch 10, **dadurch gekennzeichnet, dass** der jeweilige Riemen (16) jeweils derart zwischen den drei Kraftmessbolzen geführt ist, dass zwei Kraftmessbolzen (42, 46) an einer ersten Seite des jeweiligen Riemens (16) und der dritte Bolzens (44) an einer der ersten Seite gegenüberliegende zweiten Seite des jeweiligen Riemens (16) angeordnet sind.

12. Aufzugsanlage (10) nach einem der Ansprüche 2 bis 11, **dadurch gekennzeichnet, dass** die Steuereinheit (32) in Abhängigkeit der Differenz einen Beschädigungszustand mindestens eines der beiden Riemen (16), vorzugsweise beider Riemen (16), ermittelt.

13. Aufzugsanlage (10) nach einem der vorhergehenden Ansprüche, **dadurch gekennzeichnet, dass** die Steuereinheit (32) einen Komparator umfasst.

14. Verfahren zum Betreiben einer Aufzugsanlage (10), die eine Kabine (12), ein Gegengewicht (14), einen Motor (24) zum Bewegen der Kabine (12) und des Gegengewichts (14), einen ersten Riemen (16) zum Tragen der Kabine (12) und des Gegengewichtes (14), und mindestens einen zweiten Riemen (16) zum Tragen der Kabine (12) und des Gegengewichts (14) umfasst,
bei dem mit Hilfe einer ersten Kraftmesseinheit (30) eine im ersten Riemen (16) wirkende erste Kraft ermittelt wird,
mit Hilfe einer zweiten Kraftmesseinheit (30) eine im zweiten Riemen (16) wirkende zweite Kraft ermittelt wird, und
die erste und die zweite Kraft miteinander verglichen werden, und
bei dem in Abhängigkeit des Ergebnisses des Vergleichs beim Erfüllen mindestens eines vorbestimmten Kriteriums eine Reaktion ausgelöst wird.

15. Verfahren nach Anspruch 14, **dadurch gekennzeichnet, dass** eine Differenz zwischen der ersten und der zweiten Kraft ermittelt wird und in Abhängigkeit der Differenz beim Erfüllen des mindestens einen vorbestimmten Kriteriums eine Reaktion auslöst wird.
